Europäisches Patentamt

European Patent Office

Office européen des brevets

(11) Numéro de publication: **0 263 780**
**A1**

# (12) DEMANDE DE BREVET EUROPEEN

(21) Numéro de dépôt: **87810224.3**

(22) Date de dépôt: **08.04.87**

(51) Int. Cl.⁴: **B 23 B 31/40,** B 23 B 31/06

---

(30) Priorité: **03.10.86 CH 3964/86**

(43) Date de publication de la demande: **13.04.88**
**Bulletin 88/15**

(84) Etats contractants désignés: **CH DE ES FR GB IT LI SE**

(71) Demandeur: **Kulbus S.A., Ch. des Malpierres 2,
CH-2088 Cressier (CH)**

(72) Inventeur: **Bucher, Joseph M., Suchiez 18,
CH-2006 Neuchâtel (CH)**

(74) Mandataire: **North, Mathieu, Place des Halles 13,
CH-2001 Neuchâtel (CH)**

---

(54) **Pince pour pièces à usiner.**

㉗ Cette pince pour pièces à usiner est fixe selon l'axe Z. Elle présente à l'intérieur deux surfaces (2) coniques, l'une mâle et l'autre femelle. A l'aide d'un cône (3) mâle ou femelle, qui est poussé contre l'une ou l'autre des surfaces coniques (2) de la pince, les branches (1) sont écartées ou rapprochées l'une de l'autre. Le serrage peut donc se faire de l'intérieur vers l'extérieur et inversement. La pince est en acier doux, ce qui permet de former aisément le bout des branches pour leur donner la forme de la pièce à usiner. La pince étant fixe, la précision du point zéro est totale.

coupe AA

cône de pénétration

mâle

femelle

ACTORUM AG

00263780

1

PINCE POUR PIECES A USINER

Il a toujours été nécessaire de fixer avec une certaine précision les pièces à usiner.

Selon la technique habituelle, les pinces ("chucks") sont faites d'un corps approximativement cylindrique, creux, dont les parois présentent plusieurs fentes qui déterminent ainsi des branches, ces branches se rapprochant l'une de l'autre de façon à serrer la pièce à usiner, lorsque la pince est enfoncée dans un tube. Cet effet de serrage est obtenu grâce à la forme conique donnée à l'extérieur de la pince, dont les branches, en glissant sur les bords du tube dans lequel la pince s'enfonce, se rapprochent l'une de l'autre. Le desserrage se fait simplement en retirant la pince du tube, l'élasticité des branches les ramenant à leur position première.

Le défaut majeur de ce genre de pinces réside dans le fait que, la pince n'étant pas fixe, il est nécessaire

00263780

lors de chaque serrage de mesurer à nouveau le point zéro à partir duquel sont effectuées les opérations d'usinage selon des cotes données. En effet, le mouvement de translation nécessaire au serrage ne s'arrête jamais exactement au même point, même si la pièce à usiner est identique.

Un autre inconvénient des pinces classiques réside dans l'impossibilité de fixer une pièce en écartant les branches l'une de l'autre au lieu de les rapprocher. Or, une telle possibilité est utile dans le cas de pièces qui présentent une cavité et qui doivent être usinées à l'extérieur.

La présente invention vise à fournir une pince qui ne présente pas ces deux inconvénients.

L'invention est décrite dans les revendications.

Les dessins représentent, à titre d'exemple, une forme d'exécution de l'invention.

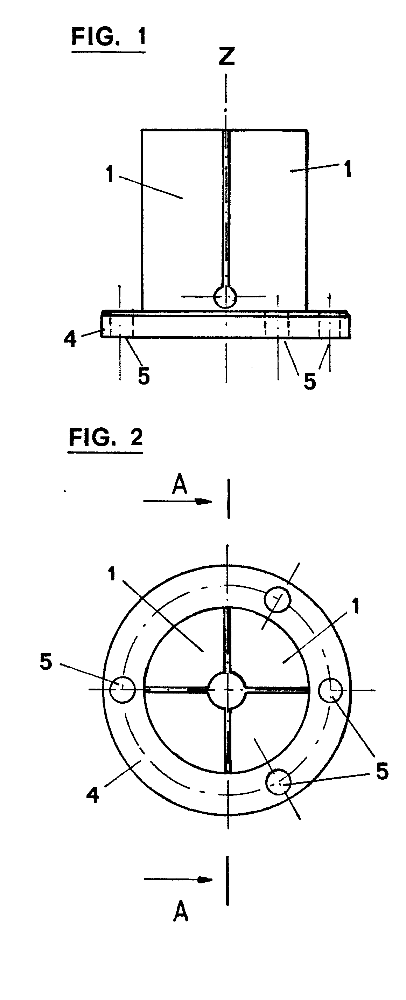

La figure 1 est une vue latérale d'une pince selon l'invention.

La figure 2 est une vue de dessus de la même pince.

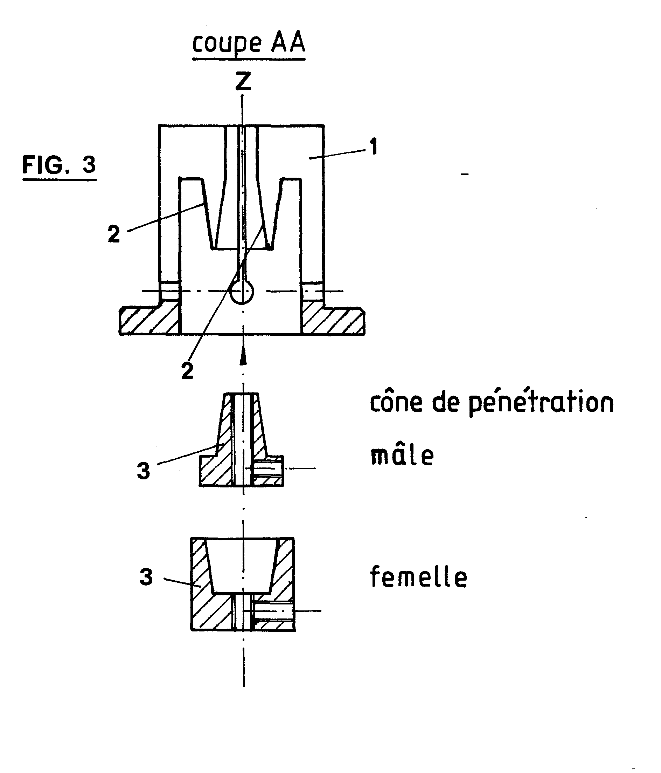

La figure 3 est une coupe selon A-A de la même pince, accompagnée d'une coupe de deux outils destinés à l'actionner.

Comme les pinces habituelles, la pince objet de l'invention a une forme générale qui est grosso modo cylindrique; des fentes pratiquées dans les parois du cylindre déterminent des branches 1. La pince est pourvue à sa base d'un rebord 4 percé de trous 5 qui permettent de la fixer et de la positionner exactement sur un bâti ou un châssis, qui n'est pas représenté ici. A l'intérieur, les branches présentent deux surfaces coniques 2, l'une mâle et l'autre femelle. Afin de serrer ou d'écarter les branches, il suffit d'appliquer une pièce 3, de forme conique inverse de celle de la surface conique 2 sur laquelle on veut agir: si l'on veut écarter les branches, on enfoncera la pièce 3 en forme de cône mâle, et si l'on veut les rapprocher, on enfoncera la pièce 3 en forme de cône femelle. Etant donné que la pince est fixée par sa base, elle ne fait aucun mouvement dans la direction de l'axe Z. Une précision absolue est ainsi obtenue.

La pièce 3 est de préférence actionnée par une came manoeuvrée par un levier. Ce mécanisme, tout à fait classique n'est pas représenté ici.

Dans une forme d'exécution plus élaborée, la pièce 3 est actionnée au moyen de rondelles-resorts en vue du serrage, le desserrage étant assuré par un piston pneumatique ou hydraulique qui, directement ou par l'intermédiaire de culbuteurs, repousse la pièce 3 dans le sens inverse de celui de la pression exercée par les rondelles-ressorts.

Quoique la forme conique des surfaces de contact soit certainement la plus favorable, il n'est pas exclus en théorie d'utiliser des surfaces obliques par rapport à l'axe Z qui ne soient pas coniques, mais par exemple des plans inclinés.

De préférence, la pince est faite d'acier doux. Cela permet de former aisément le bout des branches à la forme exacte de la pièce à usiner.

REVENDICATIONS

1. Pince pour le serrage de pièces à usiner, comprenant au moins deux branches (1), caractérisée en ce que les branches sont fixes dans un axe (Z) de coordonnées, en ce qu'au moins une branche présente au moins une surface (2) inclinée par rapport à cet axe (Z), en ce qu'elle comprend au moins une pièce (3) apte à entrer en contact avec la surface inclinée, et des moyens aptes à déplacer ladite pièce jusqu'à la surface inclinée et à lui faire exercer une pression sur ladite surface, le mouvement de déplacement et la pression de ladite pièce suivant une direction différente de la pente de la surface inclinée, la pression exercée faisant glisser la surface inclinée contre la pièce (3) et provoquant le rapprochement ou l'écartement des branches.

2. Pince selon la revendication 1, caractérisée en ce que la surface inclinée (2) est un cône ou une section de cône.

3. Pince selon la revendication 2, caractérisée en ce que la surface inclinée (2) est un cône ou une section de cône mâle.

4. Pince selon la revendication 2, caractérisée en ce que la surface inclinée (2) est un cône ou une section de cône femelle.

5. Pince selon les revendications 3 et 4, la branche présentant un cône mâle et un cône femelle.

6. Pièce selon la revendication 5, caractérisée en ce que le cône femelle et le cône mâle se trouvent à l'intérieur d'un cylindre creux dont les branches forment les parois.

7. Pince selon l'une des revendications 1 à 6, caractérisée en ce que les branches sont en acier doux.

8. Pince selon l'une des revendications 1 à 7, caractérisée en ce que le déplacement de la pièce (3) est assuré par une came manoeuvrée par un levier.

9. Pince selon l'une des revendications 1 à 7, caractérisée en ce que le déplacement de la pièce (3) est assuré pour le serrage par au moins un ressort et pour le desserage par un piston sur
lequel agit un fluide sous pression.

10. Pièce (3) apte à être utilisée dans une pince selon
les revendications 1 à 9, caractérisée en ce que la
partie destinée à glisser sur la surface inclinée a
la forme inverse de cette surface.

**FIG. 1**

Z

1    1

4

5    5

**FIG. 2**

A

1

1

5

5

4

5

A

00263780

coupe AA

Z

**FIG. 3**

1

2

2

cône de pénétration

mâle

3

femelle

3

Office européen
des brevets

**RAPPORT DE RECHERCHE EUROPEENNE**

00263780

Numero de la demande

EP 87 81 0224

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 100 446 (LEES-BRADNER)<br>* Page 2, lignes 12-41; figures I-V *<br>--- | 1-5,10 | B 23 B 31/40<br>B 23 B 31/06 |
| A | DE-A-2 350 492 (ELBE-KAMERA)<br>--- | | |
| A | US-A-1 427 155 (HAVEN)<br>----- | 6 | |

DOMAINES TECHNIQUES
RECHERCHES (Int. Cl.4)

B 23 B 31/00
B 23 Q 3/00

Le présent rapport a été établi pour toutes les revendications

| Lieu de la recherche | Date d'achèvement de la recherche | Examinateur |
|---|---|---|
| LA HAYE | 05-01-1988 | BOGAERT F.L. |